# EUROPEAN PATENT APPLICATION

(11) **EP 2 940 189 A1**
(43) Date of publication of application: **04.11.2015**
(21) Application number: 12890855.5
(22) Date of filing: 27.12.2012
(51) Int. Cl.: C23C 26/00, B32B 15/08, C09D 7/12, C09D 135/00, C09D 135/06, C09D 171/02, C23C 28/00

(54) **STEEL SHEET HAVING ALKALI-SOLUBLE LUBRICATING FILM, METHOD FOR PRODUCING SAME, AND COMPOSITION**

(71) Applicant: NIHON PARKERIZING CO., LTD., Chuo-ku Tokyo 103-0027 (JP)
(72) Inventor: SERITA Atsushi, Tokyo 103-0027 (JP); NAMAI Yoshikazu, Tokyo 103-0027 (JP); KAWAGOSHI Ryosuke, Tokyo 103-0027 (JP)
(74) Representative: Beckmann, Claus
(86) International application number: PCT/JP2012/083951
(87) International publication number: WO 2014/102982

(57) **Abstract**

The present invention provides a steel sheet which has an alkali-soluble lubricating film on the surface, and which is characterized in that: the lubricating film has a first layer that contains (A) a polyethylene oxide having a weight average molecular weight of 50,000-500,000 and (B) a copolymer of (X) a styrene-based hydrocarbon compound or an olefin-based hydrocarbon compound having 3 or more carbon atoms and (Y) either or both of a polymerizable unsaturated compound having a carboxylic anhydride group and a polymerizable unsaturated compound having a carboxy group, said compounds being copolymerizable with the compound (X), wherein some or all of the carboxylic anhydride groups and the carboxy groups contained in the copolymer may be ammonia-modified, imidized or blocked by an alcohol, with the weight ratio of the component (B) relative to the total of the component (A) and the component (B) being more than 5% by weight but less than 50% by weight, and a second layer that is provided on the first layer and is formed of an oil layer that contains an oil component having a kinetic viscosity of 3 to 32 mm²/s (at 40°C); the total adhesion amount of the component (A) and the component (B) is 0.1 to 1.0 g/m²; and the adhesion amount of the oil layer is 0.1 to 3.0 g/m².

## Description

### TECHNICAL FIELD

The present invention relates to a steel sheet having an alkali-soluble lubricating film. More specifically, the present invention can be suitably used in an automotive steel sheet having an alkali-soluble lubricating film.

### BACKGROUND ART

Various flat steel sheets represented by the automotive steel sheet are formed into desired shapes through press forming or the like, and then, subjected to painting performed thereon.

A plate-like steel sheet to be subjected to press forming is coated with rust preventive oil and delivered to a customer in the state of a steel material packed into a coil shape, a sheet shape, or the like. In a pressing process, a so-called press-cleaning oil to dilute the rust preventive oil is added to the steel sheet delivered to the customer, and the steel sheet is press-formed. Then, the press-formed steel sheet is subjected to painting in a painting process.

In a degreasing step of the painting process, the steel sheet to which the above oil content adheres is subjected to an alkali cleaning to remove the oil content. However, in a case where the oil content remains, the remaining oil content repels paint, and thus, the appearance of the painting deteriorates, or the adhesion property between the paint film and the steel material becomes poor in many cases. That is, in the pressing of the steel sheet, it is preferable for the surface state of the steel sheet to be excellent in lubricity, but if the surface of the pressed steel sheet is not cleaned in the degreasing step, this leads to a defect in subsequent steps.

As another method of giving lubricity to the surface of the steel sheet, a method for providing a film of polyethylene oxide (PEO) having an average molecular weight of 50,000 to 5,000,000 on the surface of an aluminum alloy sheet has been proposed (Patent Literature 1). In addition, a method for improving the level of lubrication has been proposed (Patent Literature 2). In the method, a first layer which contains polyethylene oxide (PEO) having a weight average molecular weight of 50,000 to 500,000 and in which the adhesion amount of the PEO is 0.1 g/m² to 1.0 g/m², and a second layer which contains lubricating oil having a kinematic viscosity of 7 mm²/s to 32 mm²/s (at 40°C) and in which the adhesion amount of the lubricating oil is 0.1 g/m² to 3.0 g/m² are provided on the surface of a steel sheet in this order.

### CITATION LIST

### PATENT LITERATURE

Patent Literature 1: JP 8-323286 A
Patent Literature 2: JP 2012-121954 A

### SUMMARY OF INVENTION

### TECHNICAL PROBLEMS

In recent years, with a rise in awareness with respect to aesthetics of products, press forming of a steel sheet into a more complex shape has been increased, and thus, a steel sheet which is more excellent in lubricity at the time of press forming has been demanded. In particular, in the case of a galvanized steel sheet, the zinc on the surface of the steel sheet is soft, and thus, agglutination of the zinc with a mold at the time of pressing easily occurs, and if the lubricity is not sufficient, so-called galling or seizing is easily generated.

As a result of the examination of the lubricity of the conventional steel sheet coated with lubricating oil and the aluminum alloy sheet having the PEO film described in JP 8-323286 A (Patent Literature 1), the present inventors found that the levels of lubricity of the conventional steel sheet and the aluminum alloy sheet described in Patent Literature 1 do not reach the level of lubricity currently required. In contrast, as a result of the examination of the lubricity of the steel sheet having the lubricating film described in JP 2012-121954 A (Patent Literature 2), it was confirmed that, in a so-called dry environment, the level of lubricity thereof satisfies the level currently required.

However, according to the further examination by the present inventors, it was confirmed that, although the steel sheet having the lubricating film described in Patent Literature 2 has no problem with respect to the formability by the pressing and is excellent in lubricity in a so-called dry environment, when the steel sheet is retained in a wet environment, the lubricity thereof deteriorates, and some of a film component and a material component adheres onto the steel sheet as a black adhering substance. As a result of the qualitative analysis of the adhering substance conducted by the present inventors, an organic component and an inorganic component were detected in the adhering substance, and it became clear that the inorganic component is a part of the surface of the steel sheet scraped away therefrom due to abrasion or wear. The present inventors consider that since the lubricating film described in Patent Literature 2 is a film excellent in removability, the first layer swells in a wet atmosphere, and the first layer and the second layer are not drawn in a mold from an introduction portion thereof, thereby the lubricity is decreased.

The plate-like steel materials are transported to a customer in the state of being packed in a shape such as a coil shape, a sheet shape, or the like. These steel materials have many opportunities to come into contact with the outside air at the time of transportation. In particular, since the steel materials are largely exported to overseas by ships, at the time of transporting to the destinations for export, or at the time of storing in the destinations for export, the steel materials experience a rainfall, a snowfall, a rainy season (a pluvial period), or the like. Therefore, these steel materials have many opportunities to be allowed to stand in a wet environment, and accordingly, improvement measures against the decrease of the lubricity at the time of being retained in a wet environment as seen in the steel sheet with a lubricating film described in Patent Literature 2 are essential.

The present invention has been made in consideration of the above-described circumstances, and an object thereof is to provide a steel sheet having an alkali-soluble lubricating film which is excellent in lubricity in a dry environment, does not exhibit deterioration of the lubricity even after being retained in a wet environment, can be properly subjected to pressing, and can be easily removed in an alkali-degreasing step after the pressing.

### SOLUTION TO PROBLEMS

As a result of conducting intensive examination, the present inventors found that the above object can be accomplished by the following constitution of the present invention.
(1) A steel sheet having an alkali-soluble lubricating film on a surface,
   wherein the lubricating film has:
   a first layer which contains (A) polyethylene oxide with a weight average molecular weight of 50,000 to 500,000 and (B) a copolymer of (X) a styrene-based hydrocarbon compound or an olefin-based hydrocarbon compound with three or more carbon atoms and (Y) either or both of a polymerizable unsaturated compound having a carboxylic anhydride group and a polymerizable unsaturated compound having a carboxy group that is copolymerizable with (X), with carboxylic anhydride groups or carboxy groups in the copolymer being partially or wholly ammonia-modified, imidized, or blocked with an alcohol in some cases, and which contains (B) at a weight ratio relative to a total of (A) and (B) of greater than 5% by weight but less than 50% by weight; and
   a second layer which is formed of an oil layer containing an oil component with a kinematic viscosity of 3 to 32 mm²/s (at 40°C) and provided on the first layer, and
   wherein a total adhesion amount of (A) and (B) is 0.1 to 1.0 g/m², and an adhesion amount of the oil layer is 0.1 to 3.0 g/m².
(2) The steel sheet having an alkali-soluble lubricating film according to (1), wherein (X) the styrene-based hydrocarbon compound or the olefin-based hydrocarbon compound with three or more carbon atoms is at least one selected from the group consisting of styrene, isobutylene and propylene, and the either or both of a polymerizable unsaturated compound having a carboxylic anhydride group and a polymerizable unsaturated compound having a carboxy group is at least one selected from the group consisting of maleic acid, acrylic acid, methacrylic acid, maleic anhydride and itaconic acid.
(3) The steel sheet having an alkali-soluble lubricating film according to (1) or (2),
   wherein the either or both of a polymerizable unsaturated compound having a carboxylic anhydride group and a polymerizable unsaturated compound having a carboxy group is maleic acid, and
   wherein greater than 0 mol% but not greater than 50 mol% of carboxy groups derived from the maleic acid in the copolymer are blocked with an alcohol with one to four carbon atoms.
(4) The steel sheet having an alkali-soluble lubricating film according to (1) or (2),
   wherein the either or both of a polymerizable unsaturated compound having a carboxylic anhydride group and a polymerizable unsaturated compound having a carboxy group is maleic anhydride, and
   wherein greater than 0 mol% but not greater than 50 mol% of carboxy groups which are generated by ring opening of carboxylic anhydride groups derived from the maleic anhydride in the copolymer are blocked with an alcohol with one to four carbon atoms.
(5) The steel sheet having an alkali-soluble lubricating film according to (1) or (2),
   wherein the either or both of a polymerizable unsaturated compound having a carboxylic anhydride group and a polymerizable unsaturated compound having a carboxy group is maleic anhydride, and
   wherein carboxylic anhydride groups derived from the maleic anhydride in the copolymer are at least partially imidized.
(6) The steel sheet having an alkali-soluble lubricating film according to any one of (1) to (5), wherein the steel sheet which has the alkali-soluble lubricating film is a zinc- or zinc alloy-coated steel sheet selected from the group consisting of a hot-dip galvanized steel sheet, a hot-dip galvannealed steel sheet, a zinc electrogalvanized steel sheet and a zinc alloy electrogalvanized steel sheet.
(7) The steel sheet having an alkali-soluble lubricating film according to any one of (1) to (6), wherein the first layer further contains at least one metal selected from the group consisting of Li, Mg, Al, Ca, Mn, Zn, Si, P, W, Zr and Sn in a form of an oxide, a hydroxide or a salt, with a total weight of (C) the oxide, the hydroxide and the salt being 0.01% by weight to 10% by weight of a total weight of (A), (B) and (C), and a total adhesion amount of (A), (B) and (C) is 0.1 to 1.0 g/m².
(8) A composition for forming a lubricating film on a steel sheet, comprising:
   (A) polyethylene oxide with a weight average molecular weight of 50,000 to 500,000; and
   (B) a copolymer of (X) a styrene-based hydrocarbon compound or an olefin-based hydrocarbon compound with three or more carbon atoms and (Y) either or both of a polymerizable unsaturated compound having a carboxylic anhydride group and a polymerizable unsaturated compound having a carboxy group that is copolymerizable with (X), with carboxy groups in the copolymer being partially ammonia-modified, imidized, or blocked with an alcohol in some cases,
   wherein (B) is at a weight ratio relative to a total of (A) and (B) of greater than 5% by weight but less than 50% by weight.
(9) The composition according to (8), further comprising at least one metal selected from the group consisting of Li, Mg, Al, Ca, Mn, Zn, Si, P, W, Zr and Sn in a form of an oxide, a hydroxide or a salt, with a total weight of (C) the oxide, the hydroxide and the salt being 0.01% by weight to 10% by weight of a total weight of (A), (B) and (C).
(10) A method for producing the steel sheet having an alkali-soluble lubricating film according to any one of (1) to (7), comprising the steps of:
   forming the first layer by applying the composition according to (8) onto a steel sheet such that the total adhesion amount of (A) and (B) is 0.1 to 1.0 g/m², or forming the first layer by applying the composition according to (9) onto a steel sheet such that a total adhesion amount of (A), (B) and (C) is 0.1 to 1.0 g/m²; and
   forming the second layer formed of the oil layer by applying a composition containing the oil component with a kinematic viscosity of 3 to 32 mm²/s (at 40°C) onto the first layer such that the adhesion amount of the oil layer is 0.1 to 3.0 g/m².

### ADVANTAGEOUS EFFECTS OF INVENTION

According to the present invention, it is possible to provide a steel sheet having an alkali-soluble lubricating film which is excellent in lubricity and can be properly subjected to pressing in a dry environment; does not exhibit deterioration of the lubricity and can be properly subjected to pressing even after being retained in a wet environment; and can be easily removed in an alkali-degreasing step after the pressing.

### BRIEF DESCRIPTION OF DRAWINGS

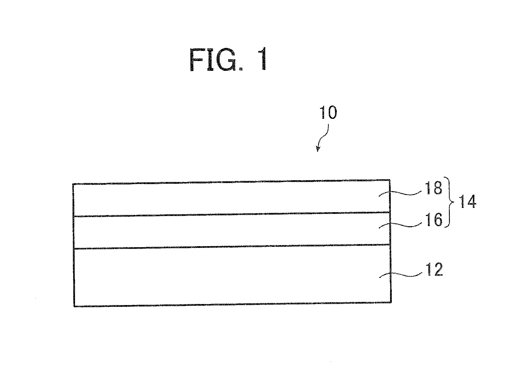

[FIG. 1] FIG. 1 is a cross-sectional view schematically showing an embodiment of a steel sheet of the present invention.

### DESCRIPTION OF EMBODIMENTS

The present invention will be described in detail below.

### [Steel sheet having lubricating film]

Hereinafter, a steel sheet having an alkali-soluble lubricating film of the present invention will be described.

The steel sheet of the present invention is characterized in that the steel sheet has a laminated-type lubricating film, and a first layer of the lubricating film contains, at a predetermined ratio, polyethylene oxide having a predetermined molecular weight and a copolymer obtained by polymerizing predetermined monomers. Since the first layer contains the polyethylene oxide, excellent lubricity is ensured. In addition, since the first layer includes the predetermined copolymer, the durability of the lubricating film itself can be improved, the scraping and peeling of the lubricating film at the time of processing of the steel sheet are more suppressed, and as a result, the excellent lubricity is maintained. In particular, in a wet environment, swelling of the first layer is more suppressed due to the presence of the copolymer, and the excellent lubricity is maintained even in a wet environment.

FIG. 1 is a cross-sectional view schematically showing an embodiment of the steel sheet having an alkali-soluble lubricating film according to the present invention.

As shown in FIG. 1, a steel sheet having an alkali-soluble lubricating film (hereafter also referred to simply as "steel sheet with a lubricating film") 10 includes a steel sheet 12 and a lubricating film 14. The lubricating film 14 has a laminated structure composed of a first layer 16 containing polyethylene oxide and a copolymer having a predetermined repeating unit, and a second layer 18 formed of an oil layer containing an oil component.

More specifically, the steel sheet with a lubricating film 10 according to the present invention has the first layer 16 that contains (A) polyethylene oxide having a weight average molecular weight of 50,000 to 500,000 and (B) a copolymer of (X) a styrene-based hydrocarbon compound or an olefin-based hydrocarbon compound having 3 or more carbon atoms and (Y) either or both of a polymerizable unsaturated compound having a carboxylic anhydride group and a polymerizable unsaturated compound having a carboxy group, which are copolymerizable with (X); and the second layer 18 that is provided on the first layer 16 and is formed of an oil layer containing an oil component having a kinematic viscosity of 3 mm²/s to 32 mm²/s (40°C). Here, in the first layer, some or all of the carboxylic anhydride groups or the carboxy groups contained in (B) may be ammonia-modified, imidized, or blocked by an alcohol, and the ratio of the weight of (B) with respect to the total weight of (A) and (B) is greater than 5% by weight but less than 50% by weight. In the steel sheet with a lubricating film 10, the total adhesion amount of (A) and (B) is 0.1 g/m² to 1.0 g/m², and the adhesion amount of the oil layer is 0.1 g/m² to 3.0 g/m². The steel sheet with a lubricating film having the above laminated structure satisfies the level of lubricity currently required; even when being retained in a wet environment, the lubricity and press-formability thereof compares favorably with those in a dry environment; and it is possible to easily remove the lubricating film from the steel sheet in a degreasing step after the forming.

Hereinafter, the steel sheet 12 and the lubricating film 14 will be described in detail.

### <Steel sheet 12>

The steel sheet 12 used in the present invention is not particularly limited. Sheets of metal materials including iron, iron-based alloy, aluminum, aluminum-based alloy, copper and copper-based alloy, as well as plated such sheets are mentioned as a usable metal sheet. Among others, a zinc coated steel sheet is preferred. As described above, the press forming of the zinc coated steel sheet is technically more difficult than the press forming of other steel sheets. Therefore, if the zinc coated steel sheet is provided with the lubricating film of the present invention, the highest effect can be expected.

The zinc coated steel sheet is exemplified by a galvanized steel sheet, a zinc-nickel coated steel sheet, a zinc-iron coated steel sheet, a zinc-chromium coated steel sheet, a zinc-aluminum coated steel sheet, a zinc-titanium coated steel sheet, a zinc-magnesium coated steel sheet, a zinc-manganese coated steel sheet, a zinc-aluminum-magnesium coated steel sheet, and a zinc-aluminum-magnesium-silicon coated steel sheet.

In addition, as the zinc coated steel sheet, a zinc coated steel sheet of which the coating layer contains cobalt, molybdenum, tungsten, nickel, titanium, chromium, aluminum, manganese, iron, magnesium, lead, bismuth, antimony, tin, copper, cadmium, arsenic, or the like as a small amount of a different metal element or impurities; or has an inorganic substance such as silica, alumina, titania, or the like dispersed therein may also be used.

Furthermore, as the zinc coated steel sheet, a multilayer coated steel sheet obtained by combining the above-described zinc coating with another type of coating (for example, iron coating, iron-phosphorous coating, nickel coating, cobalt coating, or the like) can also be used.

A coating method is not particularly limited, and a known method, for example, such as an electroplating method, a hot-dip coating method, an evaporation coating method, a dispersion coating method, a vacuum coating method, or the like, can be used.

### <Lubricating film 14>

The lubricating film 14 that is provided on the steel sheet 12 has the first layer 16 containing polyethylene oxide and the copolymer which will be described later (hereafter also referred to simply as "the first layer 16"), and the second layer 18 containing an oil component (hereafter also referred to simply as "the second layer 18").

By having such a laminated structure, the lubricating film 14 exhibits more excellent lubricity than that of the aluminum alloy sheet having the PEO film described in Patent Literature 1, and in a wet environment, the lubricating film 14 exhibits more excellent lubricity than that of the steel sheet with a lubricating film described in Patent Literature 2. In addition, while the first layer 16 disposed on the base material side (steel sheet side) can be more easily peeled off from the steel sheet in the degreasing step, the swelling thereof is suppressed even in a wet atmosphere, and the lubricity is maintained. That is, even when being retained in a wet atmosphere, in pressing or the like in which lubricity is required, the first layer and the second layer promptly enter the inside of a mold and continue to maintain an effect of sufficiently preventing the metal contact between the mold and the surface of the steel sheet.

Hereinafter, the first layer 16 and the second layer 18 will be described.

### <First layer 16>

The first layer 16 constituting a lower layer of the lubricating film 14 has polyethylene oxide having a predetermined weight average molecular weight and a copolymer produced from predetermined compounds.

Hereinafter, first, the polyethylene oxide will be described in detail, and then, the copolymer will be described in detail.

### (Polyethylene oxide)

The weight average molecular weight of polyethylene oxide (PEO) used is 50,000 to 500,000. When the weight average molecular weight is within the above-described range, the lubricating film exhibits excellent lubricity and excellent removability, and especially, from the viewpoint of excellent effects, the weight average molecular weight is preferably 60,000 to 400,000, and more preferably 70,000 to 300,000.

When the weight average molecular weight is less than 50,000, the lubricating film does not exhibit sufficient lubricity. When the weight average molecular weight is greater than 500,000, not only that it is no longer possible to further improve lubricity, but also the viscosity of the aqueous solution is extremely increased, and thus, usability at the time of forming a lubricating film becomes remarkably poor.

The weight average molecular weight can be measured by a GPC measurement (gel permeation chromatography) in which tetrahydrofuran is used as an eluent and polyethylene glycol is used as a standard sample.

The polyethylene oxide used may be synthesized by a known method, or may be a commercially available product (for example, manufactured by Sumitomo Seika Chemicals Co., Ltd.) or the like.

Polyethylene oxide is an ethylene glycol addition polymer, and has a three-dimensionally continuous helical structure in a single direction. In general, an ethylene glycol addition polymer having a high molecular weight is called polyethylene oxide (in general, weight average molecular weight of 50,000 or greater), and an ethylene glycol addition polymer having a low molecular weight is called polyethylene glycol (in general, weight average molecular weight of less than 50,000). Polyethylene oxide has the same basic structure as polyethylene glycol and has similar chemical properties to those of polyethylene glycol, but the physical properties thereof are significantly different from those of polyethylene glycol.

When the weight average molecular weight of polyethylene oxide is 50,000 to 500,000 as described above, the full length per molecule is estimated to be about 0.3 µm to 3 µm. In a case where such molecules having a large molecular size constitute a thin film, it is presumed that the molecules in the film are arranged in directions in a plane parallel to the surface of the steel sheet.

Therefore, when stress is applied to the film in a vertical direction, destruction of the film is prevented by strong covalent bonds. In addition, when stress is applied thereto in a direction in the plane, the molecules are moved due to destruction of hydrogen bonds between the molecules, and thus, the deformation following performance of the film is ensured with respect to the deformation of the substrate. Furthermore, it is considered that the toughness of the film is expressed due to the high melting point and high viscosity resulting from the high molecular weight.

### (Copolymer)

The first layer 16 constituting the lower layer of the lubricating film 14 contains a copolymer of (X) a styrene-based hydrocarbon compound or an olefin-based hydrocarbon compound having 3 or more carbon atoms and (Y) either or both of a polymerizable unsaturated compound having a carboxylic anhydride group and a polymerizable unsaturated compound having a carboxy group which are copolymerizable with (X), in which copolymer some or all of the carboxylic anhydride groups and the carboxy groups may be ammonia-modified, imidized, or blocked by an alcohol (hereafter also referred to simply as "copolymer").

The weight average molecular weight of the copolymer used is not particularly limited, and it is preferably 4,000 to 400,000. When the weight average molecular weight is within the above-described range, the lubricating film exhibits more excellent lubricity and more excellent removability.

The weight average molecular weight can be measured by a GPC measurement (gel permeation chromatography) in which tetrahydrofuran is used as an eluent and polyethylene glycol is used as a standard sample.

As a monomer used to form the copolymer, (X) a styrene-based hydrocarbon compound or an olefin-based hydrocarbon compound having 3 or more carbon atoms can be mentioned, and the type of the monomer is not particularly limited.

Examples of the styrene-based hydrocarbon compound include styrene(vinylbenzene), α-methylstyrene(isopropenylbenzene), β-methylstyrene(1-propenylbenzene), 4-methylstyrene(4-vinyl-1-methylbenzene), and 2,3-dimethylstyrene(1-ethenyl-2,3-dimethylbenzene).

The olefin-based hydrocarbon compound having 3 or more carbon atoms is preferably an olefin-based hydrocarbon compound having 3 to 20 carbon atoms, and more preferably an olefin-based hydrocarbon compound having 3 to 8 carbon atoms, and examples thereof include propylene, α-butylene (1-butene), cis-β-butylene (cis-2-butene), trans-β-butylene (trans-2-butene), isobutylene (2-methylpropene), 1-pentene, cis-2-pentene, trans-2-pentene, and the like.

As another monomer used to form the copolymer, (Y) either or both of a polymerizable unsaturated compound having a carboxylic anhydride group and a polymerizable unsaturated compound having a carboxy group which are copolymerizable with (X) can be mentioned, and the type of the monomer or monomers is not particularly limited.

The polymerizable unsaturated compound having a carboxylic anhydride group is preferably a compound obtained by intramolecular dehydration of two carboxy groups of a vinyl compound having two or more carboxy groups in one molecule, and examples thereof include maleic anhydride, itaconic anhydride and the like.

Examples of the above vinyl compound having carboxy groups include maleic acid, fumaric acid, acrylic acid, methacrylic acid, itaconic acid, mesaconic acid, trans-aconitic acid, cis-aconitic acid, and the like.

Here, the polymerizable unsaturated compound is a compound having a polymerizable unsaturated group, and the polymerizable unsaturated group refers to a group having a polymerizable double bond (for example, >C=C<).

The copolymer may be any one of a random copolymer, an alternating copolymer, and a block copolymer.

In addition, some or all of the carboxylic anhydride groups or the carboxy groups contained in the copolymer may be ammonia-modified, imidized, or blocked by an alcohol. More specifically, some or all of the carboxylic anhydride groups contained in the copolymer may be imidized, or some or all of the carboxy groups contained therein may be ammonia-modified or blocked by an alcohol.

Here, the ammonia modification means that a carboxylic anhydride group or a carboxy group is allowed to react with ammonia to modify the carboxylic anhydride group or the carboxy group.

In addition, the imidization means that a carboxylic anhydride group or a carboxy group is made to be an amido group, and by a dehydration reaction or the like of the remaining carboxyl group with the amido group, an imide bond is generated.

Furthermore, the blocking by an alcohol means that a carboxylic anhydride group or a carboxy group is allowed to react with the hydroxy group in the alcohol to generate an ester group.

Here, the blocking by an alcohol is preferably performed by an alcohol having 1 to 4 carbon atoms. However, this is to keep the boiling point of the alcohol at the level of the drying temperature when the first layer is dried and film-formed on the steel sheet, and accordingly, in an environment in which the temperature when the first layer is dried and film-formed exceeds the boiling point of the alcohol having 1 to 4 carbon atoms, the number of carbon atoms of the alcohol is not limited to this range. The alcohol having 1 to 4 carbon atoms is preferably an alkyl alcohol having 1 to 4 carbon atoms, and examples thereof include methyl alcohol, ethyl alcohol, 1-propanol, 2-propanol, 1-butanol, 2-butanol, isobutyl alcohol, tert-butyl alcohol, and the like.

For example, in a case where carboxylic anhydride groups derived from maleic anhydride are contained in the copolymer, the ammonia modification or the imidization may be performed at any modification rate with respect to carboxylic acid. In many cases, the modification rate by alcohol is about 50% at most. The imidization may be modification of a monomer itself to be copolymerized, or may be modification after the monomer is copolymerized to a copolymer, and the modification rate thereof is also arbitrary. It is preferable that greater than 0 mol% and 50 mol% or less of the carboxylic anhydride groups derived from maleic anhydride are ammonia-modified or imidized.

In addition, in a case where the carboxylic anhydride groups derived from maleic anhydride are contained in the copolymer, in the blocking by an alcohol, greater than 0 mol% and 50 mol% or less of the carboxy groups obtained by ring-opening the carboxylic anhydride groups (hydrolysis) are preferably blocked by an alcohol. The blocking by an alcohol can also be referred to as esterification by an alcohol. The total blocking rate may be adjusted by mixing those having different blocking rates.

Furthermore, in a case where carboxylic anhydride groups derived from maleic acid are contained in the copolymer, in the ammonia-modification, imidization, or blocking by an alcohol, greater than 0 mol% and 50 mol% or less of the carboxy groups derived from maleic acid may be ammonia-modified, imidized, or blocked by an alcohol.

If some of the carboxylic anhydride groups and the carboxy groups are ammonia-modified, imidized, or blocked by an alcohol, water-solubilization can be easily performed with respect to the preparation of a coating treatment liquid, and thus, it is advantageous for the preparation of chemicals.

For the above (B), (X) a styrene-based hydrocarbon compound or an olefin-based hydrocarbon compound having 3 or more carbon atoms is preferably at least one selected from the group consisting of styrene, isobutylene, and propylene (first monomer), and (Y) either or both of a polymerizable unsaturated compound having a carboxylic anhydride group and a polymerizable unsaturated compound having a carboxy group is preferably at least one selected from the group consisting of maleic acid, acrylic acid, methacrylic acid, maleic anhydride, and itaconic acid (second monomer).

The usage ratio of the first monomer to the second monomer (the first monomer/the second monomer) is not particularly limited. However, it is preferably 1/9 to 9/1, more preferably 2/8 to 8/2, and still more preferably 5/5 to 8/2. When the usage ratio, or weight ratio, is less than 1/9, workability is poor, that is, the film is easily broken at the time of press forming due to insufficient hardness of the film, and thus, it is not preferable. In contrast, when the weight ratio is greater than 9/1, the peelability of the film is decreased, and thus, it is not preferable.

In the steel sheet with a lubricating film 10, (B) the copolymer used in the first layer 16 of the lubricating film 14 preferably has a glass transition temperature of 75°C or higher, and more preferably has a glass transition temperature of 80°C or higher. Normally, the surface temperature of the steel material at the time of press forming is around 80°C, and if the glass transition temperature of the resin of the film is low, the film is damaged during the press forming in some cases.

In the steel sheet with a lubricating film 10, the weight ratio of (B) the copolymer to the total of (A) PEO and (B) the copolymer used in the first layer 16 of the lubricating film 14 is greater than 5% by weight and less than 50% by weight. When the weight ratio of (B) the copolymer is 5% by weight or less, the lubricity in a wet environment is decreased, and when the weight ratio of (B) the copolymer is 50% by weight or greater, the lubricity in a dry environment and in a wet environment is decreased. The weight ratio of (B) the copolymer to the total of (A) PEO and (B) the copolymer is preferably 10% by weight to 40% by weight, and more preferably 10% by weight to 25% by weight.

In the steel sheet with a lubricating film 10, the total adhesion amount of (A) PEO and (B) the copolymer of the first layer 16 is 0.1 g/m² to 1.0 g/m². If the total adhesion amount is within the above-described range, the steel sheet with a lubricating film 10 exhibits excellent lubricity and excellent removability even in a wet environment. From the viewpoint of obtaining more excellent effects, the total adhesion amount is preferably 0.2 g/m² to 0.9 g/m², and more preferably 0.3 g/m² to 0.7 g/m². When the adhesion amount of (A) PEO and (B) the copolymer is less than 0.1 g/m², the lubricity is poor, and when the adhesion amount is greater than 1.0 g/m², further improvement of the lubricity cannot be expected, and use of a greater amount than that is economically disadvantageous.

The measurement of the adhesion amount can be performed by using a surface carbon analyzing apparatus or the like.

Furthermore, in the steel sheet with a lubricating film 10, the first layer 16 may contain at least one metal selected from the group consisting of Li, Mg, Al, Ca, Mn, Zn, Si, P, W, Zr, and Sn in a state of an oxide, a hydroxide, or a salt. The above-described salt includes a complex salt. In the present invention, the oxide, the hydroxide, and the salt are also referred to collectively as (C) an inorganic compound or simply as (C), and (C) the inorganic compound may be contained such that the total of (C) the inorganic compound is 0.01% by weight to 10% by weight of the total of (A) PEO, (B) the copolymer, and (C) the inorganic compound. Oxides and salts of these elements do not adversely affect the sliding properties of the steel sheet, and they have the primary rust preventive function for the steel sheet as retained in a wet environment. When the amount of such materials is less than 0.01% by weight, corrosion resistance compares favorably with the present invention in which the materials are not added, and the steel sheet is practically usable. When the materials are contained in an amount of 0.01% by weight to 10% by weight, the corrosion resistance is further improved, and when the materials are added in an amount of greater than 10% by weight, the corrosion resistance is saturated.

When the first layer contains (C) the inorganic compound, the total adhesion amount of (A), (B), and (C) is 0.1 g/m² to 1.0 g/m². If the total adhesion amount is within the above-described range, the steel sheet with a lubricating film 10 exhibits excellent lubricity and excellent removability even in a wet environment. From the viewpoint of obtaining more excellent effects, the total adhesion amount is preferably 0.2 g/m² to 0.9 g/m², and more preferably 0.3 g/m² to 0.7 g/m².

Even when these materials are contained in the first layer (A) + (B) in an amount of 10% by weight or greater, the materials do not adversely affect the lubricity. The contents (% by weight) of (A), (B), and (C) in the first layer are equal to the compounding ratio (% by weight) of (A), (B), and (C) for forming the first layer, respectively.

### <Second layer 18>

The second layer 18 that is provided on the first layer 16 is a layer formed of an oil layer that contains an oil component having a kinematic viscosity of 3 mm²/s to 32 mm²/s (40°C). As the oil layer, a lubricating oil layer using lubricating oil containing a lubricating component is preferable, but the oil layer may be a rust preventive oil layer using rust preventive oil containing a lubricating component. If the kinematic viscosity is within the above-described range, the second layer 18 may be the lubricating oil itself or the rust preventive oil itself. When the steel sheet is shipped from a steel maker, on the steel sheet, rust preventive oil is applied rather than lubricating oil. At the time of pressing, a so-called press-cleaning oil is applied while diluting the rust preventive oil. On the steel sheet with a lubricating film of the present invention, pressing can be conducted even through such processes.

The oil component is not particularly limited as long as the kinematic viscosity is 3 mm²/s to 32 mm²/s (40°C), and the lubricating film exhibits excellent lubricity and excellent removability. From the viewpoint of obtaining more excellent effects, the kinematic viscosity is preferably 3 mm²/s to 28 mm²/s (40°C), more preferably 3 mm²/s to 25 mm²/s (40°C), and still more preferably 6 mm²/s to 20 mm²/s (40°C).

When the kinematic viscosity is less than 3 mm²/s (40°C), it is poor from the viewpoint of lubricity. When the kinematic viscosity is greater than 32 mm²/s (40°C), the viscosity of the oil is high, and thus, the removability is inferior.

Here, the kinematic viscosity means a kinematic viscosity measured at 40°C, and means a kinematic viscosity measured according to JIS K 2283:2000 "Crude petroleum and petroleum products - Determination of kinematic viscosity and calculation of viscosity index from kinematic viscosity."

The adhesion amount of the oil layer as the second layer is 0.1 g/m² to 3.0 g/m². When the adhesion amount is within the range, the lubricating film exhibits excellent lubricity and excellent removability. From the viewpoint of obtaining more excellent lubricity and removability, the adhesion amount is preferably 0.3 g/m² to 2.0 g/m², and more preferably 0.5 g/m² to 1.5 g/m². When the adhesion amount is less than 0.1 g/m², the lubricity is poor, and when the adhesion amount is greater than 3.0 g/m², further improvement of the lubricity cannot be expected, and it is economically disadvantageous. The measurement of the adhesion amount can be performed by using a surface carbon analyzing apparatus or the like.

### <Method for producing steel sheet having lubricating film>

The method for producing the above steel sheet having a lubricating film is not particularly limited, but is preferably carried out through the following two steps.

First layer forming step: the step of forming the first layer by applying a composition for forming the first layer on a steel sheet.

Second layer forming step: the step of forming the second layer by applying a composition for forming the second layer on the first layer.

Procedure of each step will be described in detail below.

### (First layer forming step)

In the first layer forming step, the first layer is formed by applying the composition for forming a first layer containing (A) PEO and (B) the copolymer, in which the weight ratio of (B) the copolymer with respect to the total of (A) PEO and (B) the copolymer is greater than 5% by weight and less than 50% by weight, on a steel sheet such that the total adhesion amount of (A) PEO and (B) the copolymer becomes 0.1 g/m² to 1.0 g/m². The composition for forming a first layer is used for forming a film (first layer) on which an oil layer containing an oil component having the kinematic viscosity described below is formed.

In the present invention, the concentration of the composition for forming a first layer is preferably adjusted with an aqueous diluent such that the total of (A) and (B) falls within the above-described range of the adhesion amount. Here, as the aqueous diluent, water is preferable. After application of the composition, drying is performed.

If desired, a solvent may be contained in the composition for forming a first layer. When the composition cannot be applied to the steel sheet depending on the surface state of the steel sheet, the composition may be adjusted so as to be capable of being applied to the steel sheet surface by adding a small amount of a surfactant thereto as necessary. In addition, for improving the drying property of the film or the like, as necessary, the solvent may be an aqueous solvent to which an alcohol, a ketone, or a cellosolve-based water-soluble organic solvent is added.

A method for applying the composition for forming a first layer on a steel sheet is not particularly limited, and, for example, generally used application methods such as roll coating, shower coating, air spraying, airless spraying, curtain flow coating, brushing, dipping and the like can be mentioned. If necessary, before applying the composition for forming a first layer, the surface of the steel sheet may be subjected to a degreasing treatment.

If desired, a substance called an antiseptic agent or a mildewproofing agent may be suitably added to the composition for forming a first layer. The antiseptic agent or the mildewproofing agent is not particularly limited, but rather than a substance which is a solid and is significantly aggregated or precipitated, a substance which does not change the viscosity or the liquid properties of the composition when the substance is added thereto is more suitable.

After applying the composition for forming a first layer on the steel sheet, if necessary, heat treatment may be performed to remove the solvent. The temperature of the heat treatment is preferably 50°C to 300°C, and can be adjusted in combination of the production speed of the steel material and an atmosphere for drying. If the surface temperature of the steel sheet is 60°C to 150°C, it is sufficiently suitable.

### (Second layer forming step)

The second layer forming step is a step of forming the second layer formed of the oil layer by applying the composition for forming a second layer containing an oil component having a kinematic viscosity of 3 mm²/s to 32 mm²/s (40°C) on the first layer formed in the first layer forming step such that the adhesion amount of the oil layer becomes 0.1 g/m² to 3.0 g/m². The content of the oil component in the composition for forming a second layer is not particularly limited. A solvent may be contained in the composition for forming a second layer, if necessary.

As the application method of the composition for forming a second layer, the application method of the first layer described above can be employed, and further, spray coating by an electrostatic method can also be used. If necessary, after applying the composition for forming a second layer, heat treatment may be performed.

As described above, the steel sheet having a lubricating film (steel sheet with a lubricating film) of the present invention exhibits excellent lubricity even in a wet environment, and the lubricating film thereof can be easily removed.

### <Method for producing painted steel sheet>

Using the above-described steel sheet having a lubricating film, a painted steel sheet having a paint film on the surface can be produced. That is, by using the above-described steel sheet, with respect to the steel sheet press-formed into more complicated shape, a painted steel sheet having a paint film exhibiting excellent adhesion property can be produced.

The method for producing the painted steel sheet preferably includes the following processes.

### (Pressing process) a process of performing press forming.

(Film removing process) a process of removing the lubricating film on the press-formed steel sheet using an aqueous solution.

(Painting process) a process of performing painting on the steel sheet from which the lubricating film has been removed.

Procedure of each process will be described in detail below.

### (Pressing process)

The pressing process is a process of press-forming the steel sheet having the lubricating film. By the process, the steel sheet is formed into a predetermined shape.

The method of press forming is not particularly limited, and a known method (for example, hot pressing) can be used. During the process, additional processing such as drawing, stretch forming, bending, ironing, punching or the like may be performed.

Furthermore, the press forming may be performed in one step, or may be performed in plural steps.

### (Film removing process)

The film removing process is a process of removing the lubricating film on the steel sheet, which has been formed into a predetermined shape in the pressing process, using an aqueous solution. By bringing the aqueous solution into contact with the lubricating film, the lubricating film can be removed from the steel sheet.

The aqueous solution used is not particularly limited as long as it contains water. However, from the viewpoint that the lubricating film is efficiently removed, it is preferable for the aqueous solution to be an alkali aqueous solution. The pH of the alkali aqueous solution is preferably within a range of 8 to 13. In the preparation of the alkali aqueous solution, an alkaline component added to water is not particularly limited, and examples of the alkaline component include sodium carbonate, sodium hydroxide, sodium phosphate, sodium silicate, and the like.

The method of bringing the aqueous solution into contact with the lubricating film is not particularly limited, and is exemplified by a method of applying the aqueous solution onto the steel sheet, a method of dipping the steel sheet into the aqueous solution, and the like.

The period of time for bringing the aqueous solution into contact with the lubricating film is not particularly limited, and from industrial point of view, normally, the period of time is preferably 20 seconds to 200 seconds. In addition, normally, the temperature of the aqueous solution when the aqueous solution comes into contact with the lubricating film is preferably 30°C to 50°C.

### (Painting process)

The painting process is a process of performing painting on the steel sheet from which the lubricating film has been removed in the film removing process. By painting the steel sheet from which the lubricating film has been removed, the paint film having excellent adhesion property can be formed on the steel sheet.

In the present invention, painting method and paint used are not particularly defined, and known painting means that is selected considering the adhesion property of the paint film, such as cationic electrocoating, electrostatic painting, spray painting, and the like, and commercially available paints can be utilized.

As described above, the steel sheet having a lubricating film (steel sheet with a lubricating film) according to the present invention exhibits excellent lubricity, and the lubricating film thereof can be easily removed.

The lubricating film can be easily removed by bringing the alkali aqueous solution into contact with the lubricating film for about 10 seconds.

### EXAMPLES

Hereinafter, the present invention will be specifically described with reference to Examples. However, the present invention is not limited thereto.

### [Example 1]

### (First layer forming treatment)

The surface of a metal sheet (hot-dip galvanized steel sheet; GI) was cleaned by removing dirt and oil. To the surface of the metal sheet, an aqueous solution containing a composition for forming a first layer, of which the concentration had been adjusted such that the adhesion amount a, which will be described later, was obtained, was applied by a bar coating method, and dried.

The composition for forming the first layer contains (A) polyethylene oxide (weight average molecular weight of 170,000), (B) a styrene-acrylic copolymer (weight average molecular weight of about 5,000), and water as a solvent. The composition for forming the first layer does not contain an inorganic component.

The drying of the metal sheet was performed by disposing the metal sheet in a hot air-circulating type oven, and maintaining the metal sheet for 3 seconds after the surface temperature of the steel sheet reached 80°C.

The adhesion amount of the film after the drying was obtained by creating a calibration curve of dried solid content and carbon intensity in advance, measuring carbon intensity of fluorescent X-rays, and converting the carbon intensity to the adhesion amount per unit area (m²).

The total adhesion amount of (A) and (B) in Example 1 was 0.3 g/m², the content of (A) in the first layer was 80% by weight, and the content of (B) in the first layer was 20% by weight.

### (Second layer forming treatment)

Next, a steel sheet with a lubricating film was produced by applying NOX-RUST 550HN manufactured by PARKER INDUSTRIES, INC. (kinematic viscosity of 17.4 mm²/s (40°C)) on the first layer by a roll coating method to form a second layer. The adhesion amount of the second layer was 1.5 g/m².

The adhesion amount was obtained by weighing the applied agent with a precision balance and calculating the weight per unit area.

In addition, by using a hot-dip galvannealed steel sheet (GA) instead of the hot-dip galvanized steel sheet (GI), a steel sheet with a lubricating film was produced in the same manner as above.

### [Example 2]

A steel sheet with a lubricating film was produced according to the same procedure as in Example 1 except that: (A) the polyethylene oxide (weight average molecular weight of 170,000) was replaced by (A) polyethylene oxide (weight average molecular weight of 500,000); (B) the styrene-acrylic copolymer was replaced by (B) a polystyrene-acrylic acid copolymer (weight average molecular weight of about 5,000); and the adhesion amount of the first layer was changed from 0.3 g/m² to 0.9 g/m².

### [Example 3]

A steel sheet with a lubricating film was produced according to the same procedure as in Example 1 except that: (B) the styrene-acrylic copolymer was replaced by (B) a styrene-acrylic acid copolymer (in which 50 mol% of the carboxy groups derived from acrylic acid were esterified with an alcohol having 4 carbon atoms) (weight average molecular weight of about 5,000); the total adhesion amount of (A) and (B) was changed from 0.3 g/m² to 0.4 g/m²; as well as the content of (A) was changed from 80% by weight to 90% by weight, and the content of (B) was changed from 20% by weight to 10% by weight.

### [Example 4]

A steel sheet with a lubricating film was produced according to the same procedure as in Example 1 except that: (A) the polyethylene oxide (weight average molecular weight of 170,000) was replaced by (A) polyethylene oxide (weight average molecular weight of 500,000); (B) the styrene-acrylic copolymer was replaced by (B) a styrene-maleic acid copolymer (in which 50 mol% of the carboxy groups derived from maleic acid were esterified with an alcohol having 2 carbon atoms) (weight average molecular weight of about 120,000); the total adhesion amount of (A) and (B) was changed from 0.3 g/m² to 0.2 g/m²; as well as the content of (A) was changed from 80% by weight to 55% by weight, and the content of (B) was changed from 20% by weight to 45% by weight.

In addition, by using a hot-dip galvannealed steel sheet (GA) instead of the hot-dip galvanized steel sheet (GI), a steel sheet with a lubricating film was produced in the same manner as above.

### [Example 5]

A steel sheet with a lubricating film was produced according to the same procedure as in Example 1 except that: (B) the styrene-acrylic copolymer was replaced by (B) a styrene-maleic anhydride copolymer (weight average molecular weight of about 120,000); the total adhesion amount of (A) and (B) was changed from 0.3 g/m² to 0.4 g/m²; and the adhesion amount of the second layer (oil layer) was changed from 1.5 g/m² to 3.0 g/m².

### [Example 6]

A steel sheet with a lubricating film was produced according to the same procedure as in Example 1 except that: (B) the styrene-acrylic copolymer was replaced by (B) an isobutylene-maleic anhydride copolymer (weight average molecular weight of about 120,000); the total adhesion amount of (A) and (B) was changed from 0.3 g/m² to 0.9 g/m²; and the adhesion amount of the second layer (oil layer) was changed from 1.5 g/m² to 1.0 g/m².

### [Example 7]

A steel sheet with a lubricating film was produced according to the same procedure as in Example 1 except that: (B) the styrene-acrylic copolymer was replaced by (B) an isobutylene-maleic anhydride copolymer (in which 50 mol% of the carboxylic anhydride groups derived from maleic anhydride were imidized) (weight average molecular weight of about 120,000); and the total adhesion amount of (A) and (B) was changed from 0.3 g/m² to 0.2 g/m².

### [Example 8]

A steel sheet with a lubricating film was produced according to the same procedure as in Example 1 except that: (B) the styrene-acrylic copolymer was replaced by (B) an isobutylene-maleic anhydride copolymer (in which 50 mol% of the carboxylic anhydride groups derived from maleic anhydride were imidized) (weight average molecular weight of about 120,000); (C) an inorganic compound comprising aluminum (Al) and phosphorus (P) was further added to the composition for forming the first layer; the total adhesion amount of (A), (B), and (C) was not specified to be 0.3 g/m² but 0.4 g/m²; and the first layer was defined such that the content of (A) remained 80% by weight, the content of (B) was changed to 19% by weight, and the content of (C) was 1% by weight.

In addition, by using a hot-dip galvannealed steel sheet (GA) instead of the hot-dip galvanized steel sheet (GI), a steel sheet with a lubricating film was produced in the same manner as above.

### [Example 9]

A steel sheet with a lubricating film was produced according to the same procedure as in Example 1 except that: (C) an inorganic compound comprising zinc (Zn) and phosphorus (P) was further added to the composition for forming the first layer; the total adhesion amount of (A), (B), and (C) was not specified to be 0.3 g/m² but 0.4 g/m²; and the first layer was defined such that the content of (A) remained 80% by weight, the content of (B) was changed to 19% by weight, and the content of (C) was 1% by weight.

### [Example 10]

A steel sheet with a lubricating film was produced according to the same procedure as in Example 1 except that: (C) an inorganic compound comprising zinc (Zn) and phosphorus (P) was further added to the composition for forming the first layer; (A) the polyethylene oxide (weight average molecular weight of 170,000) was replaced by (A) polyethylene oxide (weight average molecular weight of 500,000); the total adhesion amount of (A), (B), and (C) was not specified to be 0.3 g/m² but 0.4 g/m²; and the first layer was defined such that the content of (A) remained 80% by weight, the content of (B) was changed to 10% by weight, and the content of (C) was 10% by weight.

### [Example 11]

A steel sheet with a lubricating film was produced according to the same procedure as in Example 1 except that: as (C) an inorganic compound, SiO₂ was further added to the composition for forming the first layer; (B) the styrene-acrylic copolymer was replaced by (B) a styrene-maleic acid copolymer (in which 50 mol% of the carboxy groups derived from maleic acid were blocked with an alcohol having 4 carbon atoms) (weight average molecular weight of about 5,000); the total adhesion amount of (A), (B), and (C) was not specified to be 0.3 g/m² but 0.4 g/m²; and the first layer was defined such that the content of (A) was changed to 80.5% by weight, the content of (B) was changed to 19% by weight, and the content of (C) was 0.5% by weight.

### [Example 12]

A steel sheet with a lubricating film was produced according to the same procedure as in Example 1 except that: as (C) an inorganic compound, WO₃ was further added to the composition for forming the first layer; (A) the polyethylene oxide (weight average molecular weight of 170,000) was replaced by (A) polyethylene oxide (weight average molecular weight of 500,000); (B) the styrene-acrylic copolymer was replaced by (B) a styrene-maleic acid copolymer (in which 50 mol% of the carboxy groups derived from maleic acid were blocked with an alcohol having 2 carbon atoms) (weight average molecular weight of about 5,000); the total adhesion amount of (A), (B), and (C) was not specified to be 0.3 g/m² but 0.4 g/m²; and the first layer was defined such that the content of (A) was changed to 78% by weight, the content of (B) remained 20% by weight, and the content of (C) was 2% by weight.

In addition, by using a hot-dip galvannealed steel sheet (GA) instead of the hot-dip galvanized steel sheet (GI), a steel sheet with a lubricating film was produced in the same manner as above.

### [Example 13]

A steel sheet with a lubricating film was produced according to the same procedure as in Example 1 except that: as (C) an inorganic compound, ZrO₂ was further added to the composition for forming the first layer; (B) the styrene-acrylic copolymer was replaced by (B) an isobutylene-maleic anhydride copolymer (weight average molecular weight of about 120,000); the total adhesion amount of (A), (B), and (C) was not specified to be 0.3 g/m² but 0.4 g/m²; and the first layer was defined such that the content of (A) was changed to 78% by weight, the content of (B) remained 20% by weight, and the content of (C) was 2% by weight.

### [Example 14]

A steel sheet with a lubricating film was produced according to the same procedure as in Example 1 except that: as (C) an inorganic compound, LiOH was further added to the composition for forming the first layer; (B) the styrene-acrylic copolymer was replaced by (B) an isobutylene-maleic anhydride copolymer (weight average molecular weight of about 120,000); the total adhesion amount of (A), (B), and (C) was not specified to be 0.3 g/m² but 0.4 g/m²; and the first layer was defined such that the content of (A) was changed to 59.5% by weight, the content of (B) was changed to 40% by weight, and the content of (C) was 0.5% by weight.

### [Example 15]

A steel sheet with a lubricating film was produced according to the same procedure as in Example 1 except that: as (C) an inorganic compound, ZnO was further added to the composition for forming the first layer; (B) the styrene-acrylic copolymer was replaced by (B) an isobutylene-maleic anhydride copolymer (in which 50 mol% of the carboxylic anhydride groups derived from maleic anhydride were imidized) (weight average molecular weight of about 120,000); the total adhesion amount of (A), (B), and (C) was not specified to be 0.3 g/m² but 0.4 g/m²; the first layer was defined such that the content of (A) was changed to 78% by weight, the content of (B) remained 20% by weight, and the content of the inorganic compound was 2% by weight; and the adhesion amount of the second layer (oil layer) was changed from 1.5 g/m² to 1.0 g/m².

### [Example 16]

A steel sheet with a lubricating film was produced according to the same procedure as in Example 1 except that: as (C) an inorganic compound, ZrO₂ was further added to the composition for forming the first layer; (B) the styrene-acrylic copolymer was replaced by (B) an isobutylene-maleic anhydride copolymer (in which 50 mol% of the carboxylic anhydride groups derived from maleic anhydride were imidized) (weight average molecular weight of about 120,000); the total adhesion amount of (A), (B), and (C) was not specified to be 0.3 g/m² but 0.4 g/m²; and the first layer was defined such that the content of (A) was changed to 79% by weight, the content of (B) remained 20% by weight, and the content of the inorganic compound was 1% by weight.

### [Comparative Example 1]

A steel sheet not subjected to the first layer forming treatment and the second layer forming treatment was prepared.

### [Comparative Example 2]

A steel sheet with a lubricating film was produced according to the same procedure as in Example 1 except that: (B) the styrene-acrylic copolymer was not used; and the adhesion amount of (A) in the first layer was specified to be 0.4 g/m².

In Comparative Example 2, (B) the styrene-acrylic copolymer was not contained in the first layer.

### [Comparative Example 3]

A steel sheet with a lubricating film was produced according to the same procedure as in Example 1 except that: (A) the polyethylene oxide (weight average molecular weight of 170,000) was not used; and the adhesion amount of (B) in the first layer was specified to be 0.4 g/m².

In Comparative Example 3, (A) the polyethylene oxide was not contained in the first layer.

### [Comparative Example 4]

A steel sheet with a lubricating film was produced according to the same procedure as in Example 1 except that: (A) the polyethylene oxide (weight average molecular weight of 170,000) was not used; (B) the styrene-acrylic copolymer was replaced by (B) a styrene-maleic anhydride copolymer (weight average molecular weight of about 120,000); and the adhesion amount of (B) in the first layer was specified to be 0.4 g/m².

In Comparative Example 4, (A) the polyethylene oxide was not contained in the first layer.

### [Comparative Example 5]

A steel sheet with a lubricating film was produced according to the same procedure as in Example 1 except that: (B) the styrene-acrylic copolymer was replaced by (B) a styrene-maleic anhydride copolymer (weight average molecular weight of about 120,000); the total adhesion amount of (A) and (B) was changed from 0.3 g/m² to 0.4 g/m²; as well as the content of (A) in the first layer was changed from 80% by weight to 40% by weight, and the content of (B) in the first layer was changed from 20% by weight to 60% by weight.

In Comparative Example 5, the weight ratio of (B) with respect to the total weight of (A) and (B) was out of the predetermined range.

### [Comparative Example 6]

A steel sheet with a lubricating film was produced according to the same procedure as in Example 1 except that: (B) the styrene-acrylic copolymer was replaced by (B) an isobutylene-maleic anhydride copolymer (in which 50 mol% of the carboxylic anhydride groups derived from maleic anhydride were imidized) (weight average molecular weight of about 120,000); the total adhesion amount of (A) and (B) was changed from 0.3 g/m² to 0.4 g/m²; as well as the content of (A) in the first layer was changed from 80% by weight to 98% by weight, and the content of (B) in the first layer was changed from 20% by weight to 2% by weight.

In Comparative Example 6, the weight ratio of (B) with respect to the total weight of (A) and (B) was out of the predetermined range.

### [Comparative Example 7]

A steel sheet with a lubricating film was produced according to the same procedure as in Example 1 except that: (B) the styrene-acrylic copolymer was replaced by (B) a styrene-maleic acid copolymer (weight average molecular weight of about 5,000); and the total adhesion amount of (A) and (B) was changed from 0.3 g/m² to 0.05 g/m².

In Comparative Example 7, the total adhesion amount of (A) and (B) was out of the predetermined range.

### [Comparative Example 8]

A steel sheet with a lubricating film was produced according to the same procedure as in Example 1 except that: (A) the polyethylene oxide (weight average molecular weight of 170,000) was replaced by (A) polyethylene oxide (weight average molecular weight of 500,000); the total adhesion amount of (A) and (B) was changed from 0.3 g/m² to 0.4 g/m²; and the adhesion amount of the second layer (oil layer) was changed from 1.5 g/m² to 0.05 g/m².

In Comparative Example 8, the adhesion amount of the second layer was out of the predetermined range.

### [Comparative Example 9]

When polyethylene oxide (weight average molecular weight of 700,000) was dissolved in water at a concentration of 2% by weight, the absolute viscosity was greater than 300 mPa·s, and as a result, roll coating with the solution was substantially impossible, and thus, it was not possible to obtain a steel sheet.

When the solution was diluted with water until the roll coating became possible, the concentration of polyethylene oxide was too low, and as a result, it was not possible to secure the predetermined adhesion amount of polyethylene oxide.

[Table 1]

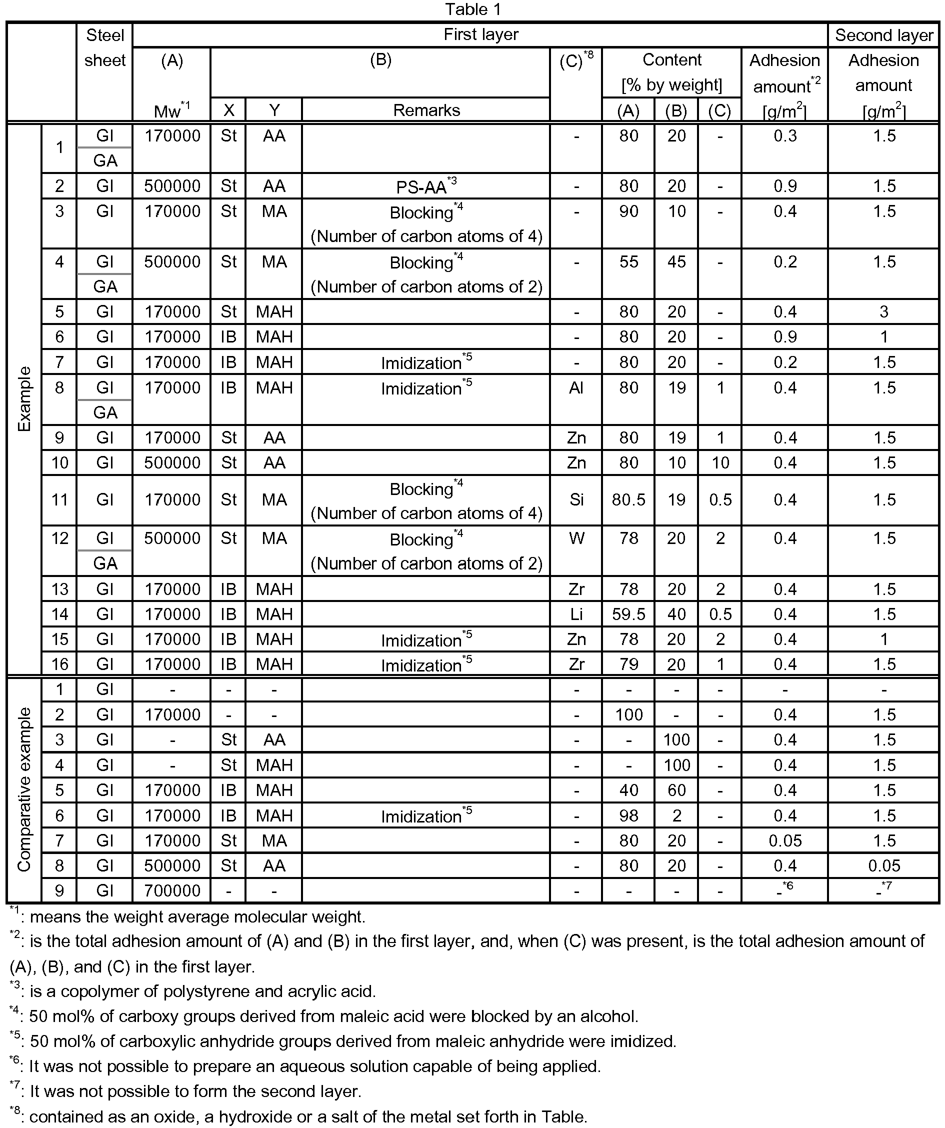

In Table 1, the meanings of the symbols are as follows.
GI: A hot-dip galvanized steel sheet.
GA: A hot-dip galvannealed steel sheet.
X: A styrene-based hydrocarbon compound or an olefin-based hydrocarbon compound having 3 or more carbon atoms.
Y: Either or both of a polymerizable unsaturated compound having a carboxylic anhydride group and a polymerizable unsaturated compound having a carboxy group, which are copolymerizable with X.
St: Styrene.
IB: Isobutylene.
AA: Acrylic acid.
MA: Maleic acid.
MAH: Maleic anhydride.

The following evaluations were performed on the steel sheets obtained in Examples and Comparative Examples.

### <Flat surface sliding test on workability>

The test piece was cut to a size of 30 mm x 300 mm, and a flat surface sliding test was performed on the lubricating film surface of the steel sheet using a universal testing machine (in a room temperature environment under such conditions that the die was a mirror finished flat surface die (both shoulders of 5 mm round), the pressing load was 10 kN, the sliding speed was 360 mm/min, and the sliding distance was 100 mm).

### (1) Adjustment of dry environment and wet environment.

In the test, the lubricity after retention in a wet environment was evaluated (as the presence of black refuse). The wet environment was of two types.

Dry environment: The sliding test was performed immediately after applying oil.

Wet environment A: The test piece was held in an environment at 40°C and 70% RH for one day after applying oil, and the sliding test was performed two hours after the test piece was taken out from the environment.

Wet environment B: The test piece was held in an environment at 40°C and 90% RH for three hours after applying oil, and the sliding test was performed within one minute after the test piece was taken out from the environment.

### (2) Evaluation methods.

### (2-1) Evaluation method 1: Workability (appearance determination).

The surface state and the presence of black refuse were visually checked during the flat surface sliding test.
A: No or very little black refuse was present.
B: Black refuse was little, but more or less visible.
C: The film was slightly peeled off in a sliding area, and black refuse was much.
D: The base material was considerably bared, and galling, stick-slip, or chatter was recognized.

In the evaluation, A is the best rating, and rating B indicates that the steel sheet in question was practicable, with ratings C and D being unfavorable.

### (2-2) Evaluation method 2: Workability (dynamic friction coefficient)

In the flat surface sliding test, from the pressing load and the drawing load, the dynamic friction coefficient (µ') was calculated. Evaluation was performed as follows.
Excellent: µ' < 0.08
Good: 0.08 ≤ µ' < 0.1
No good: µ' ≥ 0.1

"Excellent" and "Good" ratings are acceptable, and "No good" rating is not acceptable.

### <Degreasability (film removability) test>

Using an alkaline degreaser Fine Cleaner E2011 (manufactured by Nihon Parkerizing Co., Ltd.), a bath was so prepared with tap water of Hiratsuka city as to contain 13 g/L of agent A of the degreaser and 7 g/L of agent B thereof, and heated to 43°C. Each test piece was immersed with shaking in the bath for 2 minutes. Then, the relevant test piece was rinsed with water by immersing it with shaking in the same tap water for 30 seconds. Subsequently, the test piece was kept vertical for 30 seconds to remove water therefrom, and the water-wetted area ratio of the surface of the steel sheet in a state of being allowed to stand still in an upright position was visually determined. In practical use, it is preferable that a state of being wet with water is maintained. Here, the water-wetted area ratio (%) represents a ratio of the area of the portion which is wet with water with respect to the total area of the steel sheet when the steel sheet surface is visually observed.

### <Evaluation Method>

Excellent: Water-wetted area ratio was 100%.
Good: Water-wetted area ratio was 80% or greater but less than 100%.
Fair: Water-wetted area ratio was 50% or greater but less than 80%.
Bad: Water-wetted area ratio was less than 50%.
"Excellent" and "Good" ratings are acceptable, and "Fair" and "Bad" ratings are not acceptable.

### <Evaluation of primary rust prevention capacity>

In the evaluation of primary rust prevention capacity, the evaluation was performed by the following method and in the following environment.

### (1) Preparation of test piece

The target surfaces (surfaces with a lubricating film) of the steel sheets were so superimposed as to face each other, clamps called chucks were disposed at the four corners thereof, the chucks were fastened with bolts and nuts, and the bolts and nuts were tightened and fixed by a torque wrench. The tightening torque by the torque wrench was 70 kgf/cm².

The above test piece was held in a wet environment at 40°C and 70% RH for 10 days. After 10 days, the test piece was taken out from the wet environment, the pressure by the torque wrench was removed, and the presence or absence of white rust and the occurrence portion of white rust on the steel sheets having faced each other were checked.

### (2) Evaluation Method

Excellent: White rust was not observed in the inner area 0.5 cm away from the edge of the sheet (white rust was very slightly observed at the edge).
Good: White rust was slightly observed in the area between the edge and the position about 1 cm away from the edge.
Fair: White rust was observed in the area between the edge and the position about 2 cm away from the edge, and in the area more inside, white rust was faintly observed, although at an inconspicuous level.
Bad: White rust was observed in the area up to the vicinity of the center of the sheet from the edge.
"Excellent" (extremely suitable) and "Good" (practically suitable) ratings are acceptable, and "Fair" (Unsuitable) and "Bad" (entirely unsuitable) ratings are not acceptable.

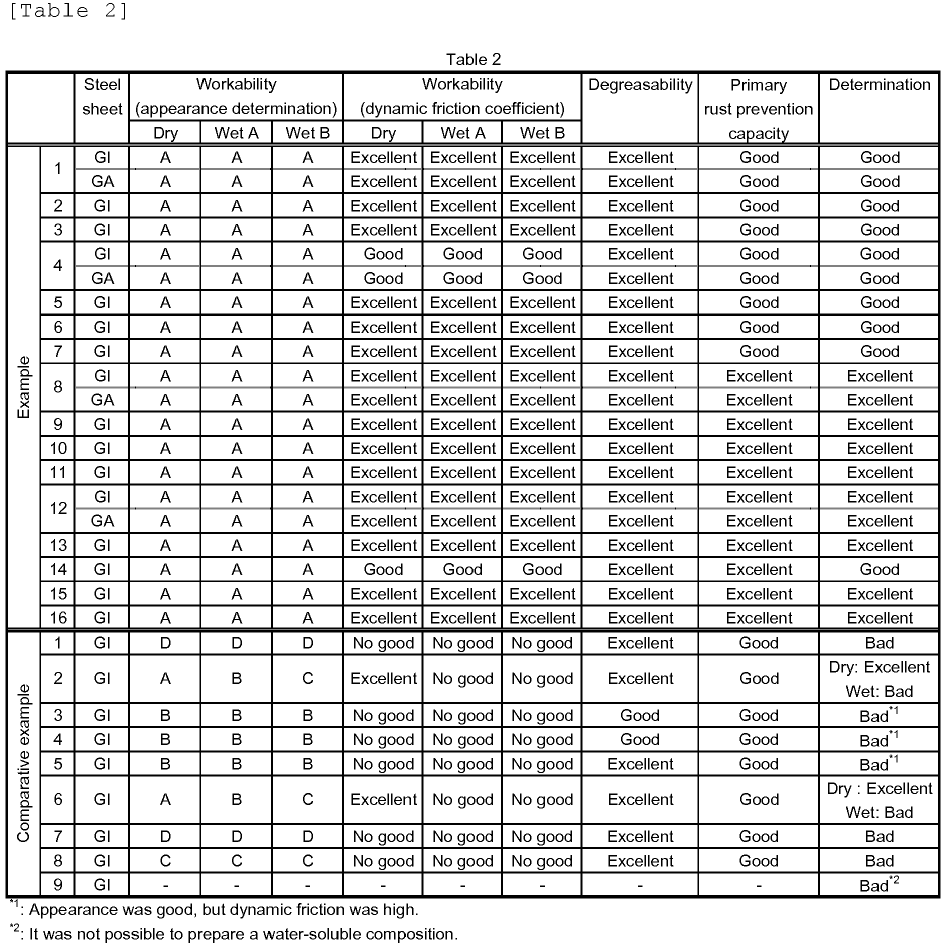

As shown in Table 2, in the steel sheets of Examples 1 to 16 of the present invention, even when the steel sheets were retained in a wet environment, black refuse was not observed, the dynamic friction coefficient µ' was below 0.1, and thus, the lubricity was excellent. In addition, the degreasability (film removability) was also satisfactory. Above all, the steel sheets of Examples 1 to 3, 5 to 13, 15, and 16 in which the weight ratio of (B) with respect to (A) + (B) was 10% by weight to 25% by weight showed more excellent workability.

The steel sheets of Comparative Examples 1 to 8 out of the scope of the present invention were practicable indeed in terms of the primary rust prevention capacity and the degreasability (film removability). However, the steel sheets corresponded to the following (a) or (b), and were not at a satisfactory level in terms of both (all) the relevant evaluations.
(a) The appearance determination was rated C or D and the dynamic friction coefficient µ' was high, so that neither of them was satisfactory.
(b) Black refuse was much or the dynamic friction coefficient µ' was 0.1 or greater, so that one or the other was not satisfactory.

In Examples 1, 4, 8, and 12, the same results were obtained in a case where the steel sheet was a GI and in a case where the steel sheet was a GA.

### REFERENCE SIGNS LIST

- 10: STEEL SHEET HAVING A LUBRICATING FILM (STEEL SHEET WITH A LUBRICATING FILM)
- 12: STEEL SHEET
- 14: LUBRICATING FILM
- 16: FIRST LAYER
- 18: SECOND LAYER

## Claims

1. A steel sheet having an alkali-soluble lubricating film on a surface,
wherein the lubricating film has:
a first layer which contains (A) polyethylene oxide with a weight average molecular weight of 50,000 to 500,000 and (B) a copolymer of (X) a styrene-based hydrocarbon compound or an olefin-based hydrocarbon compound with three or more carbon atoms and (Y) either or both of a polymerizable unsaturated compound having a carboxylic anhydride group and a polymerizable unsaturated compound having a carboxy group that is copolymerizable with (X), with carboxylic anhydride groups or carboxy groups in the copolymer being partially or wholly ammonia-modified, imidized, or blocked with an alcohol in some cases, and which contains (B) at a weight ratio relative to a total of (A) and (B) of greater than 5% by weight but less than 50% by weight; and
a second layer which is formed of an oil layer containing an oil component with a kinematic viscosity of 3 to 32 mm²/s (at 40°C) and provided on the first layer, and
wherein a total adhesion amount of (A) and (B) is 0.1 to 1.0 g/m², and an adhesion amount of the oil layer is 0.1 to 3.0 g/m².

2. The steel sheet having an alkali-soluble lubricating film according to Claim 1, wherein (X) the styrene-based hydrocarbon compound or the olefin-based hydrocarbon compound with three or more carbon atoms is at least one selected from the group consisting of styrene, isobutylene and propylene, and the either or both of a polymerizable unsaturated compound having a carboxylic anhydride group and a polymerizable unsaturated compound having a carboxy group is at least one selected from the group consisting of maleic acid, acrylic acid, methacrylic acid, maleic anhydride and itaconic acid.

3. The steel sheet having an alkali-soluble lubricating film according to Claim 1 or 2,
wherein the either or both of a polymerizable unsaturated compound having a carboxylic anhydride group and a polymerizable unsaturated compound having a carboxy group is maleic acid, and
wherein greater than 0 mol% but not greater than 50 mol% of carboxy groups derived from the maleic acid in the copolymer are blocked with an alcohol with one to four carbon atoms.

4. The steel sheet having an alkali-soluble lubricating film according to Claim 1 or 2,
wherein the either or both of a polymerizable unsaturated compound having a carboxylic anhydride group and a polymerizable unsaturated compound having a carboxy group is maleic anhydride, and
wherein greater than 0 mol% but not greater than 50 mol% of carboxy groups which are generated by ring opening of carboxylic anhydride groups derived from the maleic anhydride in the copolymer are blocked with an alcohol with one to four carbon atoms.

5. The steel sheet having an alkali-soluble lubricating film according to Claim 1 or 2,
wherein the either or both of a polymerizable unsaturated compound having a carboxylic anhydride group and a polymerizable unsaturated compound having a carboxy group is maleic anhydride, and
wherein carboxylic anhydride groups derived from the maleic anhydride in the copolymer are at least partially imidized.

6. The steel sheet having an alkali-soluble lubricating film according to any one of Claims 1 to 5, wherein the steel sheet which has the alkali-soluble lubricating film is a zinc- or zinc alloy-coated steel sheet selected from the group consisting of a hot-dip galvanized steel sheet, a hot-dip galvannealed steel sheet, a zinc electrogalvanized steel sheet and a zinc alloy electrogalvanized steel sheet.

7. The steel sheet having an alkali-soluble lubricating film according to any one of Claims 1 to 6, wherein the first layer further contains at least one metal selected from the group consisting of Li, Mg, Al, Ca, Mn, Zn, Si, P, W, Zr and Sn in a form of an oxide, a hydroxide or a salt, with a total weight of (C) the oxide, the hydroxide and the salt being 0.01% by weight to 10% by weight of a total weight of (A), (B) and (C), and a total adhesion amount of (A), (B) and (C) is 0.1 to 1.0 g/m².

8. A composition for forming a lubricating film on a steel sheet, comprising:
(A) polyethylene oxide with a weight average molecular weight of 50,000 to 500,000; and
(B) a copolymer of (X) a styrene-based hydrocarbon compound or an olefin-based hydrocarbon compound with three or more carbon atoms and (Y) either or both of a polymerizable unsaturated compound having a carboxylic anhydride group and a polymerizable unsaturated compound having a carboxy group that is copolymerizable with (X), with carboxy groups in the copolymer being partially ammonia-modified, imidized, or blocked with an alcohol in some cases,
wherein (B) is at a weight ratio relative to a total of (A) and (B) of greater than 5% by weight but less than 50% by weight.

9. The composition according to Claim 8, further comprising at least one metal selected from the group consisting of Li, Mg, Al, Ca, Mn, Zn, Si, P, W, Zr and Sn in a form of an oxide, a hydroxide or a salt, with a total weight of (C) the oxide, the hydroxide and the salt being 0.01% by weight to 10% by weight of a total weight of (A), (B) and (C).

10. A method for producing the steel sheet having an alkali-soluble lubricating film according to any one of Claims 1 to 7, comprising:
the step of forming the first layer by applying the composition according to Claim 8 onto a steel sheet such that the total adhesion amount of (A) and (B) is 0.1 to 1.0 g/m², or the step of forming the first layer by applying the composition according to Claim 9 onto a steel sheet such that a total adhesion amount of (A), (B) and (C) is 0.1 to 1.0 g/m²; and
the step of forming the second layer formed of the oil layer by applying a composition containing the oil component with a kinematic viscosity of 3 to 32 mm²/s (at 40°C) onto the first layer such that the adhesion amount of the oil layer is 0.1 to 3.0 g/m².
